# EUROPÄISCHE PATENTSCHRIFT

(11) **EP 0 941 186 B1**
(45) Veröffentlichungstag und Bekanntmachung des Hinweises auf die Patenterteilung: **23.07.2003**
(21) Anmeldenummer: 97951265.4
(22) Anmeldetag: 26.11.1997
(51) Int. Cl.: B60T 8/36

(54) **MEHRWEGESITZVENTIL**
MULTI-WAY SEAT VALVE
SOUPAPE A SIEGE A PLUSIEURS VOIES

(30) Priorität: 05.12.1996 DE 19650426
(43) Veröffentlichungstag der Anmeldung: 15.09.1999
(73) Patentinhaber: Continental Teves AG & Co. oHG, 60488 Frankfurt (DE)
(72) Erfinder: STEFFES, Helmut, D-65795 Hattersheim (DE)
(74) Vertreter: Blum, Klaus-Dieter
(86) Internationale Anmeldenummer: EP9706587
(87) Internationale Veröffentlichungsnummer: WO98024670

(56) Entgegenhaltungen:
- EP-A- 0 149 523
- DE-A- 4 028 447
- DE-A- 4 030 571

## Beschreibung

Die Erfindung betrifft ein Mehrwegesitzventil, insbesondere für hydraulische Drucksteuerkreise nach dem Oberbegriff des Patentanspruchs 1.

Sowohl aus der DE 40 30 571 A1 als auch der DE 40 28 447 A1 sind bereits Mehrwege-Sitzventile bekannt geworden, die als 2/2-Wegeventile ausgeführt sind, wobei der Ventilsitz im Ventilgehäuse eingelassen ist, während das Ventilschließglied in Verbindung mit einem Magnetanker elektromagnetisch entweder eine Druckmittelöffnung im Ventilsitz öffnet oder verschließt. Hinsichtlich der damit entstehenden metallischen Abdichtung zwischen dem Ventilschließglied und dem Ventilsitz ergeben sich entsprechend hohe Anforderungen an die Fertigungsqualität der miteinander korrespondierenden Dichtflächen, insbesondere auch in Verbindung auf die Anwendung eines derartigen Mehrwegesitzventils für hydraulische Hochdrucksteuerkreise.

Daher ist es die Aufgabe der Erfindung, ein Mehrwegesitzventil zu schaffen, das sich mit relativ geringem Mitteleinsatzkostengünstig herstellen läßt, ohne Einschränkungen hinsichtlich der Funktionsfähigkeit hinnehmen zu müssen. Ferner soll es sich für die Verwendung in hydraulischen Hochdrucksteuerkreisen eignen.

Diese Aufgaben werden erfindungsgemäß für ein Mehrwegesitzventil der eingangs genannten Art mit den kennzeichnenden Merkmalen des Patentanspruchs 1 gelöst.

Weitere Merkmale, Vorteile und Anwendungsmöglichkeiten der Erfindung gehen im nachfolgenden aus den Unteransprüchen als auch anhand den Beschreibungsbeispielen verschiedener Ausführungsformen hervor.

Es zeigen:
- Fig. 1: eine erste Ausführungsform des erfindungsgemäßen Mehrwegesitzventils,
- Fig. 2: eine weitere alternative Ausführungsform des erfindungsgemaßen Mehrwegesitzventils,
- Fig. 3: die Verwendung des erfindungsgemäßen Mehrwegesitzventils für einen Hochdrucksteuerkreis einer Fahrzeugniveauregelung.

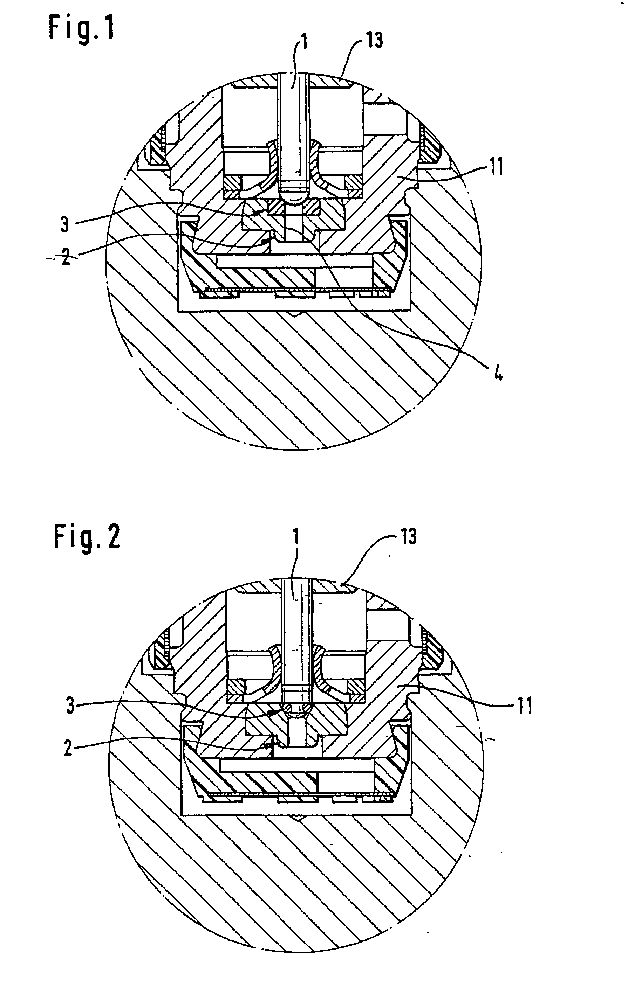

Die Fig. 1 zeigt in erheblich vergrößerter Darstellung einen Querschnitt durch ein teilweise abgebildetes Mehrwegesitzventil, im wesentlichen bestehend aus einem stößelförmigen, metallischen Ventilschließglied 1, an dem zur elektromagnetischen Betätigung ein Magnetanker 13 angebracht ist, so daß beide Teile innerhalb einer Stufenbohrung eines Ventilgehäuses 11 axial beweglich geführt sind. In der Stufenbohrung des Ventilgehäuses 11 befindet sich ein vorzugsweise verstemmter metallischer Ventilsitzkörper 2, der ein an die Kontur des Ventilschließgliedes 1 angepaßtes, nicht metallisches Dichtelement 3 aufweist. Die Verwendung des erfindungsgemäßen Dichtelementes 3, das elastische Eigenschaften aufweist, führt zu einer leckagefreien, sicheren Abdichtung. Als Werkstoff eignet sich beispielsweise ein Elastomer. Im abbildungsgemäßen Ausführungsbeispiel besteht das Dichtelement 3 in der einfachsten Ausführung aus einem im Ventilsitzkörper 2 einvulkanisierten Gummieinsatz. Mit größerem Herstellaufwand kann das Dichtelement 3 aus einem hochdruckfesten, nicht metallischen Werkstoff bestehen, beispielsweise eignen sich hierzu auch entsprechende alterungsbeständige und möglichst auch quellfreie Kunststoffe. In der Fig. 1 ist das Ventilschließglied 1 in seiner elektromagnetisch nicht erregten Schließstellung am Dichtelement 3 des Ventilsitzkörpers 2 anliegend gezeigt. Das Dichtelement 3 hat die Kontur eines Hohlzylinders und ist in Richtung des kugelförmigen Ventilschließgliedes 1 kugelförmig geöffnet und von der Druckmittelöffnung 4 durchdrungen.

Eine Alternative zur Ausführungsform nach Fig. 1 geht aus der Darstellung gemäß Fig. 2 hervor, wonach das erfindungsgemäße Dichtelement 3 nun nicht im Ventilsitzkörper 2, sondern an dem dem Ventilsitzkörper 2 zugewandten Ende des Ventilschließgliedes 1 angebracht ist. Hierzu eignet sich als Dichtelement 3 beispielsweise ein Gummidichtring, der im Endbereich des Ventilschließgliedes 1 in einer Nut gehalten ist. Es ist jedoch gleichfalls möglich, anstelle der abbildungsgemäßen Anordnung eines Gummidichtringes die Schließfläche des Ventilschließgliedes 1 mit einer druckmitteldichten Beschichtung zu versehen, die in der Funktion des Dichtelementes 3 gleichfalls wie in Fig. 1 als Vulkanisat ausgebildet sein kann. Die bezüglich der Ausführungsform nach Fig. 1 beschriebenen Ausgestaltungsvarianten sind gleichfalls auf das Mehrwegesitzventil nach Fig. 2 übertragbar, so daß bis auf die jeweils gewählte Anordnung des Dichtelementes 3 am Ventilsitzkörper 2 oder am Ventilschließglied 1 Identität der Elemente vorliegt.

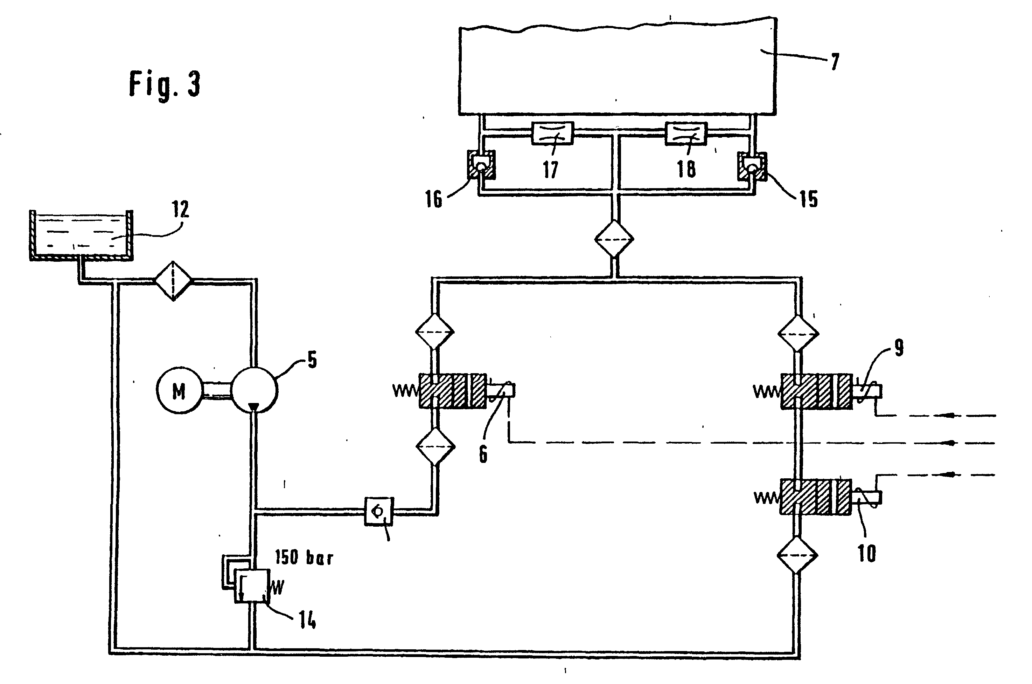

Die Fig. 3 zeigt ein zweckmäßiges Ausführungsbeispiel zur Anwendung des aus den Figuren 1 und 2 bekannten Mehwegesitzventils 10 für einen Hochdrucksteuerkreis, dessen wesentlichen Elemente in der Abbildung schematisch und damit überschaubar skizziert sind. Bei dem hydraulischen Hochdrucksteuerkreis handelt es sich um die Versorgung einer Kraftfahrzeug-Niveauregelung, bestehend aus einem Vorratsbehälter 12, an dem als Hilfsdruckquelle eine elektromotorisch angetriebene Pumpe 5 angeschlossen ist, deren Ausgangsdruck mittels eines Druckbegrenzerventils 14 auf beispielhaft 150 bar einreguliert ist, wobei die Druckseite der Pumpe 5 über ein in Richtung der Pumpe 5 sperrendes, vorzugsweise nicht metallisches Rückschlagventil 8 (Gummiventil) mit einem 2/2-Wegeventil 6 verbunden ist, das mittels elektromagnetischer Ansteuerung in die Offenstellung schaltbar ist, um über stromabwärts nachgeschaltete metallische Rückschlagventile 15,16 und Blenden 17,18 das von der Pumpe 5 geförderte Druckmittel einem Verstellorgan 7 der Fahrzeugniveauregelung zuzuführen. An der vom 2/2-Wegeventil 6 zum Verstellorgan 7 führenden Druckmittelleitung ist ferner ein als Druckabbauventil wirksames, zweites 2/2-Wegeventil 9 angeschlossen, das gleichfalls in seiner elektromagnetisch nicht erregten Grundstellung in Sperrstellung verharrt. Beide 2/2-Wegeventile 6,9 weisen einen gemäß der DE 40 30 571 A1 entsprechenden konventionellen Aufbau auf, dies hat zur Folge, daß durch die ausschließliche metallische Abdichtung der Ventilschließglieder an den Ventilsitzkörpern der 2/2-Wegeventile 6,9 nicht unter allen Umständen eine absolute Dichtheit des als Druckabbauventils wirksamen 2/2-Wegeventils 9 gewährleistet ist. Hingegen muß das erste 2/2-Wegeventil 6 nicht-dicht sein, da ihm ein Gummi-Rückschlagventil 8 vorgeordnet ist. Ein solches Gummi-Rückschlagventil 8 ist jedoch stromabwärts zwischen dem zweiten 2/2-Wegeventil 9 und dem Vorratsbehälter 12 nicht zu verwenden, da es durch den vollen Betriebsdruck Schaden nehmen würde. Deshalb wird nunmehr auf verblüffend einfache Weise für den abbildungsgemäßen Drucksteuerkreis vorgeschlagen, daß das erfindungsgemäße Mehrwegesitzventil dem 2/2-Wegeventil 9 nachgeschaltet ist. Damit läßt sich auf besonders einfache Weise ein absolut dichter Hochdrucksteuerkreis herstellen. Bei einem Druckabbau über das zweite 2/2-Wegeventil 9 der volle Betriebsdruck der Pumpe 5 über das geöffnete erfindungsgemäße Dichtelement 3 zum Vorratsbehälter 12 ohne eine Funktionseinschränkung. In der Schließstellung des 2/2-Wegeventil 9 stellt sich an gleichfalls geschlossenen Mehrwegesitzventil 10 ein Druckausgleich ein, ohne daß in der geschlossenen Stellung beider Ventile Druckmittelvolumen abfließen kann. Im vorliegenden Anwendungsfall basiert somit die Erfindung auf einer Kombination von in Serie angeordnetem 2/2-Wegeventil 9 mit metallischer Abdichtung und einer nachgeschalteten nicht metallischen Abdichtung mittels elastischen Dichtelement 3 innerhalb des Mehrwegesitzventils 10. Zu beachten ist, daß durchaus ein Gummieinsatz als Dichtelement im Mehrwegesitzventil 10 verwendet werden kann, der nicht strömungsfest und damit hoch beanspruchbar sein muß, wenn bei einem Druckabbau im Drucksteuerkreis zuerst das Mehrwegeventil 10 elektromagnetisch geöffnet wird und danach-erst das metallische 2/2-Wegeventil 9 in Offenstellung geschaltet wird. Für den Druckaufbau, wird zunächst das 2/2-Wegeventil 9 und anschließend das Mehrwegesitzventil 10 geschlossen, wodurch das erfindungsgemäße Dichtelement im Mehrwegesitzventil nur gering belastet ist.

### Bezugszeichenliste

- 1: Ventilschließglied
- 2: Ventilsitz
- 3: Dichtelement
- 4: Druckmittelöffnung
- 5: Pumpe
- 6: 2/2-Wegeventil
- 7: Verstellorgan
- 8: Rückschlagventil
- 9: 2/2-Wegeventil
- 10: Mehrwegesitzventil
- 11: Ventilgehäuse
- 12: Vorratsbehälter
- 13: Magnetanker
- 14: Druckbegrenzerventil
- 15,16: Rückschlagventile
- 17,18: Blenden

## Patentansprüche

1. Mehrwegesitzventil, insbesondere für hydraulische Hochdrucksteuerkreise, mit einem metallischen Ventilschließglied (1) und einem eine Druckmittelöffnung (4) aufweisenden metallischen Ventilsitz (2), wobei der Ventilsitz (2) vom Ventilgehäuse (11) aufgenommen ist und das Ventilschließglied (1) im Ventilgehäuse beweglich geführt ist, **dadurch gekennzeichnet, daß** zwischen dem Ventilschließglied (1) und dem Ventilsitz (2) in der Ventilschließstellung ein nicht metallisches Dichtelement (3) angeordnet ist.

2. Mehrwegesitzventil nach Anspruch 1, **dadurch gekennzeichnet, daß** das Dichtelement (3) aus einem quellfreien und alterungsbeständigen Werkstoff besteht.

3. Mehrwegesitzventil nach Anspruch 1 oder 2, **dadurch gekennzeichnet, daß** das Dichtelement (3) elastisch ist.

4. Mehrwegesitzventil nach einem der vorhergehenden Ansprüche 1 bis 3 **dadurch gekennzeichnet, daß** das Dichtelement (3) ein Elastomer ist.

5. Mehrwegesitzventil nach einem der vorhergehenden Ansprüche, **dadurch gekennzeichnet, daß** das Dichtelement (3) ein Vulkanisat ist.

6. Mehrwegesitzventil nach einem der vorhergehenden Ansprüche, **dadurch gekennzeichnet, daß** das Dichtelement (3) am Ventilschließglied (1) angebracht ist.

7. Mehrwegesitzventil nach einem der vorhergehenden Ansprüche 1 bis 5, **dadurch gekennzeichnet, daß** das Dichtelement (3) am Ventilsitz (2) angebracht ist.

8. Verwendung eines Mehrwegesitzventils nach einem der vorhergehenden Ansprüche 1 bis 7 zur Druckmittelsteuerung in einem Verstellorgan, insbesondere für Fahrzeugniveauregelanlagen, im wesentlichen bestehend aus einer Hilfsdruckquelle, der Hilfsdruckquelle nachgeschalteten Drucksteuerventilen sowie Rückschlagventilen und Drossel zur Regelung der Position des Verstellorganes, **gekennzeichnet durch** nachfolgende Merkmale:
- die Hilfsdruckquelle besteht aus einer Pumpe (5)
- stromabwärts zur Pumpe (5) ist in einer Druckmittelverbindung als Drucksteuerventil ein in Grundstellung geschlossenes 2/2-Wegeventil (6) angeordnet, das mit dem Verstellorgan (7) über eine Druckmittelleitung verbunden ist
- zwischen dem 2/2-Wegeventil (6) und der Pumpe (5) ist ein in Richtung der Pumpe (5) sperrendes Rückschlagventil (8) angeordnet
- einem in Grundstellung geschlossenen, zweiten 2/2-Wegeventil (9), das eine Druckmittelverbindung zum ersten 2/2-Wegeventil (6) und dem Verstellorgan (7) aufweist, folgt stromabwärts das Mehrwegeventil (10), das den Drucksteuerkreis schließt und gleichfalls wie die Pumpe (5) an einem Vorratsbehälter (12) angeschlossen ist.

## Claims

1. Multi-way seat valve, in particular for hydraulic highpressure control circuits, with a metallic valve closure member (1) and a metallic valve seat (2) including a pressure fluid opening (4), the said valve seat (2) being accommodated in the valve housing (11) and the valve closure member (1) being movably guided in the valve housing,
**characterized in that** a non-metallic sealing element (3) is arranged between the valve closure member (1) and the valve seat (2) in the valve closing position.

2. Multi-way seat valve as claimed in claim 1,
**characterized in that** the sealing element (3) is made of a non-swelling and non-ageing material.

3. Multi-way seat valve as claimed in claim 1 or 2,
**characterized in that** the sealing element (3) is elastic.

4. Multi-way seat valve as claimed in any one of the preceding claims 1 to 3,
**characterized in that** the sealing element (3) is an elastomer.

5. Multi-way seat valve as claimed in any one of the preceding claims,
**characterized in that** the sealing element (3) is made of a vulcanized material.

6. Multi-way seat valve as claimed in any one of the preceding claims,
**characterized in that** the sealing element (3) is fitted to the valve closure member (1).

7. Multi-way seat valve as claimed in any one of the preceding claims 1 to 5,
**characterized in that** the sealing element (3) is fitted to the valve seat (2).

8. Use of a multi-way seat valve as claimed in any one of the preceding claims 1 to 7 for pressure fluid control in an adjusting element, in particular for vehicle level control systems, substantially comprised of an auxiliary pressure source, pressure control valves connected downstream of the auxiliary pressure source as well as non-return valves and throttle for controlling the position of the adjusting element,
**characterized by** the following features:
- the auxiliary pressure source comprises a pump (5),
- connected downstream of pump (5), a two-way/two-position directional control (6) closed in its initial position is arranged as a pressure control valve in a pressure fluid connection, said valve (6) being connected to the adjusting element (7) by way of a pressure fluid line,
- a non-return valve (8) closing in the direction of pump (5) is arranged between the two-way/two-position directional control valve (6) and the pump (5),
- a second two-way/two-position directional control valve (9) that is closed in its initial position and includes a pressure fluid connection to the first two-way/two-position directional control valve (6) and the adjusting element (7) is followed downstream by the multi-way valve (10) that closes the pressure control circuit and is connected to a supply reservoir (12) like pump (5).

## Revendications

1. Soupape à siège à plusieurs voies, en particulier pour circuits hydrauliques de commande sous haute pression, comportant un obturateur de soupape (1) métallique et un siège de soupape (2) métallique présentant une ouverture pour fluide sous pression (4), le siège de soupape (2) étant logé par le boîtier de soupape (11) et l'obturateur de soupape (1) étant guidé déplaçable dans le boîtier de soupape, **caractérisée en ce que** dans la position de fermeture de la soupape, un élément d'étanchéité (3) non métallique est disposé entre l'obturateur de soupape (1) et le siège de soupape (2).

2. Soupape à siège à plusieurs voies selon la revendication 1, **caractérisée en ce que** l'élément d'étanchéité (3) est constitué d'une matière qui ne gonfle pas et qui est résistante au vieillissement.

3. Soupape à siège à plusieurs voies selon la revendication 1 ou 2, **caractérisée en ce que** l'élément d'étanchéité (3) est élastique.

4. Soupape à siège à plusieurs voies selon l'une des revendications 1 à 3, **caractérisée en ce que** l'élément d'étanchéité (3) est un élastomère.

5. Soupape à siège à plusieurs voies selon l'une des revendications précédentes, **caractérisée en ce que** l'élément d'étanchéité (3) est une matière vulcanisée.

6. Soupape à siège à plusieurs voies selon l'une des revendications précédentes, **caractérisée en ce que** l'élément d'étanchéité (3) est placé sur l'obturateur de soupape (1).

7. Soupape à siège à plusieurs voies selon l'une des revendications 1 à 5 précédentes, **caractérisée en ce que** l'élément d'étanchéité (3) est placé sur le siège de soupape (2).

8. Utilisation d'une soupape à siège à plusieurs voies selon l'une des revendications 1 à 7 pour la commande d'un fluide sous pression dans un organe de réglage, en particulier pour des installations de régulation du niveau de véhicule, essentiellement constituées d'une source de pression auxiliaire, de soupapes de commande de pression montées en aval de la source de pression auxiliaire ainsi que de clapets de non-retour et d'organes d'étranglement pour la régulation de la position de l'organe de réglage, **caractérisée par** les caractéristiques suivantes :
- la source de pression auxiliaire est constituée d'une pompe (5),
- en aval de la pompe (5) est disposée, dans une liaison de fluide sous pression en tant que soupape de commande de pression, une soupape à 2/2 voies (6) fermée en position de base, qui est reliée à l'organe de réglage (7) par une conduite de fluide sous pression,
- entre la soupape à 2/2 voies (6) et la pompe (5), est disposé un clapet de non-retour (8) qui se ferme en direction de la pompe (5),
- en aval d'une deuxième soupape à 2/2 voies (9) qui est fermée en position de base et qui comporte une liaison de fluide sous pression avec la première soupape à 2/2 voies (6) et l'organe de réglage (7), fait suite la soupape à plusieurs voies (10) qui ferme le circuit de commande de pression et qui, comme la pompe (5), est raccordée à un réservoir (12).
